# FASCICULE DE BREVET EUROPEEN

(11) **EP 1 596 607 B1**
(45) Date de publication et mention de la délivrance du brevet: **06.06.2007**
(21) Numéro de dépôt: 05290918.1
(22) Date de dépôt: 26.04.2005
(51) Int. Cl.: H04N 7/26, H04N 5/14

(54) **Procédé et dispositif de génération de vecteurs candidats pour les systèmes d'interpolation d'images par estimation et compensation de mouvement**
Verfahren und Anordnung zur Erzeugung von Kandidatenvektoren für Bildinterpolierungssyteme, die Bewegungsabschätzung und -kompensation verwenden
Method and device for generating candidate vectors for image interpolation systems using motion estimation and compensation

(30) Priorité: 29.04.2004 FR 0404571
(43) Date de publication de la demande: 16.11.2005
(73) Titulaire: STMicroelectronics S.A., 92120 Montrouge (FR)
(72) Inventeur: Nicolas, Marina, 38120 Le Fontanil Cornillon (FR)
(74) Mandataire: Verdure, Stéphane

(56) Documents cités:
- EP-A- 0 874 523
- WO-A-99/40726

## Description

La présente invention est relative au domaine de l'affichage séquentiel d'images, et plus précisément, aux procédés de traitement d'images pour l'encodage d'images ou l'insertion d'images, au sein d'une séquence d'images de type vidéo ou film.

Dans certains systèmes de traitement d'images vidéo ou film, le débit d'images (nombre d'images par seconde) est insuffisant pour un affichage de qualité. Par conséquent, des images supplémentaires sont générées via une fonction d'interpolation et affichées entre des images d'origine pour augmenter le débit d'images et améliorer la qualité de l'affichage. Une fonction d'interpolation de ce type calcule classiquement la valeur des pixels d'une image interpolée en fonction notamment de la valeur des pixels de l'image d'origine précédente et/ou de la valeur des pixels de l'image d'origine suivante.

Une telle fonction d'interpolation est basée sur la corrélation qui existe entre des images successives d'une vidéo ou d'un film. En effet, dans une séquence d'images vidéo, des sujets qui se déplacent apparaissent généralement dans des zones différentes respectives de plusieurs images consécutives. On génère donc des images interpolées à partir de parties d'images d'origine précédentes et/ou suivantes.

Une image est classiquement divisée en blocs de pixels et on fait l'hypothèse que chaque bloc se retrouve sensiblement à l'identique d'une image à l'autre même s'il y a eu un mouvement de ce bloc entre deux images. De ce fait, une image est interpolée à partir d'images d'origine en recherchant pour chaque bloc courant de l'image en cours d'interpolation, celui des blocs d'une image d'origine précédente et/ou d'une image d'origine suivante qui est le plus probable.

Des procédés d'estimation et/ou de compensation de mouvement proposent des méthodes de recherche de blocs ainsi adaptés pour la génération d'images interpolées. Une corrélation entre les parties des images consécutives où un objet en déplacement apparaît, peut s'exprimer via un vecteur de mouvement. Ce dernier représente le mouvement d'un bloc de pixels d'une image à l'autre. Il a une composante verticale et une composante horizontale, représentant le déplacement qui doit être appliqué à un bloc d'une image précédente pour arriver à la position d'un bloc de pixels sensiblement identique dans une image suivante.

De tels procédés sont classiquement utilisés dans des systèmes de compression de données vidéo, comme par exemple des systèmes basés sur la norme MPEG. De tels systèmes permettent de réduire la quantité des données d'image à transmettre ou à mémoriser en compressant ces données afin de permettre leur transfert rapide sur des réseaux numériques ou encore des lignes téléphoniques ou leur enregistrement sur des médias numériques. Par conséquent, seules certaines images de référence sont codées et transmises puis, côté réception, les images intermédiaires manquantes sont interpolées en fonction des vecteurs de mouvement transmis avec les images codées.

Dans de tels systèmes, côté émission, on traite l'image intermédiaire afin de transmettre le moins d'informations possibles, comme cela est dit ci-dessus. Ainsi, l'image intermédiaire est divisée en blocs. Pour chaque bloc, une corrélation est calculée entre le bloc courant et une sélection de blocs candidats appartenant à une image de référence ou à une image intermédiaire précédente et/ou suivante déjà traitée. Ce calcul de corrélation fournit une erreur relative associée à chaque bloc candidat. Un bloc candidat est ensuite élu pour représenter le bloc courant de l'image intermédiaire. Le bloc candidat élu est celui qui présente la plus grande corrélation avec le bloc courant, c'est à dire l'erreur la plus faible. Afin de permettre l'interpolation des images intermédiaires côté réception, l'image traitée n'étant pas transmise en tant que telle, on transmet les informations suivantes, qui sont généralement émises relativement à chaque bloc courant d'une image à interpoler :
- une indication du bloc candidat élu ;
- un vecteur de mouvement représentant une translation du bloc candidat élu vers la position du bloc courant ;
- une erreur fournie par le calcul de corrélation.

Ainsi, côté réception, les images manquantes sont interpolées sur la base des informations reçues avec les images de référence codées, cette interpolation comprenant la détermination d'une valeur des pixels de chaque bloc de ces images manquantes. Les termes « images de références » sont équivalents aux termes « images d'origine ».

Certains systèmes d'affichage d'images entrelacées utilisent également des procédés d'estimation et/ou de compensation de mouvement.

Des dispositifs de conversion de débit d'images mettent aussi en oeuvre de tels procédés. En effet ces dispositifs permettent d'augmenter un débit d'images d'origine en générant des images supplémentaires par interpolation des images d'origine. Ces dispositifs sont classiquement utilisés pour adapter des débits d'images entre un système de génération, codage, transmission et/ou stockage d'images d'une part, et un système d'affichage d'images d'autre part, qui impliquent des débits d'images différents.

Dans de tels dispositifs, l'image à interpoler est divisée en blocs. Pour chacun des blocs, on génère des vecteurs candidats. Pour chacun des vecteurs candidats, on sélectionne un bloc dans l'image d'origine précédente et un bloc dans l'image d'origine suivante, correspondant chacun à une translation de la position du bloc courant relative au vecteur candidat. Puis on calcule la corrélation entre le bloc sélectionné de l'image précédente et le bloc sélectionné de l'image suivante. On élit le vecteur de mouvement donnant la plus grande corrélation. Le bloc courant est alors interpolé à partir du bloc dans l'image d'origine précédente et du bloc dans l'image d'origine suivante qui sont déterminés par le vecteur candidat élu.

Les termes « image traitée » font référence à des images divisées en une pluralité de blocs et pour chacun desquels un vecteur de mouvement a été élu. Ainsi, par interpolation des images traitées, on génère des images interpolées.

La section suivante présente des notions de base classiquement utilisées dans des procédés d'estimation de mouvement. On distingue communément plusieurs types d'images : des images d'origine de type I (Intra) qui sont codées sans référence à d'autres images, des images de type P (Predictives) qui sont interpolées via un algorithme d'estimation de mouvement sur la base d'une image d'origine précédente, et des images de type B (Bidirectionnelles) qui sont interpolées via un algorithme d'estimation de mouvement sur la base d'une image d'origine précédente et d'une image d'origine suivante.

Comme décrit précédemment, une estimation de mouvement repose sur l'hypothèse qu'un bloc de pixels de l'image en cours de traitement peut être modélisé en tant que translation d'un bloc de pixels de l'image d'origine précédente et/ou d'un bloc de pixels de l'image suivante. Dans une telle modélisation, on suppose donc que chaque pixel d'un même bloc de pixels subit sensiblement la même translation. Un vecteur de mouvements associé à chaque bloc de pixels d'une image traitée représente ce mouvement de translation. Puis, en appliquant à chacun des blocs de pixels de l'image d'origine précédente et/ou à chacun des blocs de pixels de l'image d'origine suivante une translation respective correspondant au vecteur de mouvement associé, on génère chaque bloc courant de l'image en cours de traitement.

De l'art antérieur, on connaît des procédés d'estimation de mouvement dans lesquels, pour un bloc courant d'une image en cours de traitement, on génère des vecteurs candidats à partir de vecteurs de mouvement déjà associés à des blocs de pixels d'images déjà traitées, ou bien déjà associés à des blocs de pixels voisins du blocs de pixels courant de l'image en cours de traitement. De tels procédés sont de ce fait de type itératif.

Un des problèmes des procédés itératifs est le phénomène de convergence. En effet, un tel procédé de type itératif peut ne pas converger lorsqu'il associe un vecteur de mouvement à un bloc de pixels courant alors que ce vecteur de mouvement ne donne pas une grande corrélation pour ce bloc de pixels. Cela peut se produire notamment lorsque, parmi les vecteurs de mouvement candidats sélectionnés pour un bloc de pixels, aucun ne donne une corrélation satisfaisante. En général, dans ce cas, le vecteur de mouvement candidat présentant la plus grande corrélation relative est élu pour être associé au bloc de pixel. On comprend ainsi que des vecteurs de mouvement, ne donnant pas une grande corrélation absolue, peuvent être associés à des blocs de pixels et de là peuvent ensuite être sélectionnés en tant que vecteurs de mouvement candidats pour d'autres traitements de blocs de pixels. Ce phénomène « boule de neige » d'un procédé de type itératif peut amener un tel procédé à diverger de façon critique.

Afin d'éviter de tels écueils, on a déjà proposé des procédés d'estimation de mouvement qui génère des vecteurs candidats à partir de vecteurs de mouvement déjà associés à des blocs de pixels, en leur ajoutant des vecteurs de mise à jours aléatoires. Ainsi, on introduit une composante aléatoire dans les vecteurs candidats relatifs à un bloc de pixels courant, ce qui favorise le phénomène de convergence des procédés itératifs.

Le document EP 0 874 523 A1 divulgue une méthode d'augmentation de la fréquence de trames d'un signal utilisant l'estimation et la compensation de mouvement pour des applications vidéo. Pour chaque bloc d'image est associé un vecteur de mouvement que l'on détermine à partir d'un vecteur candidat auquel on a appliqué de petites perturbations. Le vecteur candidat est lui-même choisi en utilisant des règles de logique floue à partir des vecteurs de mouvement des blocs voisins (spatialement et temporellement).

La présente invention vise à améliorer encore le phénomène de convergence des procédés d'estimation de mouvement.

Un premier aspect de l'invention propose un procédé d'estimation de mouvement pour le traitement d'images destinées à s'insérer chacune entre une image d'origine précédente et une image d'origine suivante dans une séquence d'images déterminées, chaque image étant divisée en une pluralité de blocs de pixels, un vecteur de mouvement étant associé à chacun des blocs de pixels d'une image traitée, le procédé comprenant pour un bloc de pixels courant d'une image en cours de traitement, les étapes de:
- sélection de vecteurs de mouvement comprenant des vecteurs de mouvement respectivement associés à des blocs de pixels déterminés de l'image en cours de traitement et/ou des vecteurs de mouvement respectivement associés à des blocs de pixels déterminés d'une image déjà traitée ;
- pour chacun des vecteurs de mouvement ainsi sélectionnés, détermination d'un vecteur de mise à jour associé ;
- génération de vecteurs de mouvement candidats, chacun étant défini à partir d'un vecteur de mouvement sélectionné et du vecteur de mise à jour associé ;
- élection d'un vecteur de mouvement parmi lesdits vecteurs de mouvement candidats;
- mémorisation d'une information associant ledit vecteur de mouvement élu au bloc de pixels courant ;
suivant lequel on calcule et on mémorise une valeur de confiance pour chaque vecteur de mouvement associé à un bloc; et
suivant lequel ledit vecteur de mise à jour est déterminé en fonction de ladite valeur de confiance respective.

Un deuxième aspect de l'invention propose un dispositif d'estimation de mouvement pour le traitement d'images destinées à s'insérer chacune entre une image d'origine précédente et une image d'origine suivante dans une séquence d'images déterminées, chaque image étant divisée en une pluralité de blocs de pixels, un vecteur de mouvement étant associé à chacun des blocs de pixels d'une image traitée, le dispositif comprenant des moyens de traitement d'un bloc de pixels courant d'une image en cours de traitement incluant :
- une unité de sélection pour sélectionner des vecteurs de mouvement comprenant des vecteurs de mouvement associés à des blocs de pixels respectifs de l'image en cours de traitement et/ou des vecteurs de mouvement respectivement associés à des blocs de pixels déterminés d'une image déjà traitée
- une unité de détermination pour déterminer un vecteur de mise à jour associé pour chacun des vecteurs de mouvement sélectionnés ;
- une unité de génération pour générer des vecteurs de mouvement candidats, chacun étant défini à partir d'un vecteur de mouvement sélectionné et du vecteur de mise à jour associé;
- une unité d'élection pour élire un vecteur de mouvement parmi lesdits vecteurs de mouvement candidats;
- une mémoire pour mémoriser une information associant ledit vecteur de mouvement élu au bloc de pixels courant ;
et comprenant en outre des moyens de calcul et de mémorisation d'une valeur de confiance pour chaque vecteur de mouvement associé à un bloc;
l'unité de détermination étant adaptée pour déterminer ledit vecteur de mise à jour en fonction de ladite valeur de confiance respective.

Un troisième aspect de l'invention propose un produit « programme d'ordinateur » chargeable directement dans la mémoire interne d'un ordinateur numérique, comprenant des portions de code de logiciel pour l'exécution des étapes du procédé selon le premier aspect.

D'autres aspects, buts et avantages de l'invention apparaîtront à la lecture de la description d'un de ses modes de réalisation.

L'invention sera également mieux comprise à l'aide des dessins, sur lesquels:
- la figure 1 illustre les principales étapes d'un procédé selon un mode de réalisation de l'invention ;
- la figure 2 illustre un procédé d'estimation de mouvement selon un mode de réalisation de la présente invention ;
- la figure 3 illustre un calcul de corrélation d'une image traitée à partir des images d'origine précédente et suivante.

Comme décrit en introduction, un vecteur de mouvement associé à un bloc de pixels donné d'une image traitée ou en cours de traitement, représente la translation de chaque pixel du bloc depuis une image d'origine précédente jusqu'à l'image en cours de traitement ou depuis l'image en cours de traitement jusqu'à l'image d'origine suivante. Il convient de noter que cette représentation de mouvement n'est en fait qu'approximative. Il résulte donc que certains pixels du bloc courant ainsi translatés ne se retrouvent pas dans l'image d'origine précédente et/ou l'image d'origine suivante. Parfois, un vecteur de mouvement associé à un bloc s'avère être très peu fiable quant à la représentation du mouvement réel de l'ensemble des pixels du bloc. Il parait judicieux de ne pas se baser directement sur des valeurs de vecteurs de mouvement peu fiables, déjà associés à des blocs de pixels, pour la génération de vecteurs candidats pour un bloc de pixels en cours traitement.

Dans un mode de réalisation de l'invention, quand un vecteur de mouvement est associé à un bloc, une valeur de confiance est déterminée pour ce vecteur de mouvement. Ainsi, la génération des vecteurs de mouvement candidats peut être avantageusement réalisée en tenant compte de la valeur de confiance des vecteurs de mouvement.

La présente invention propose en outre de générer des vecteurs de mouvement candidats à partir de vecteurs de mouvement déjà associés à des blocs de pixels d'images traitées ou d'images en cours de traitement en leur ajoutant un vecteur de mise à jour déterminé en fonction de la valeur de confiance qui est relative audit vecteur de mouvement.

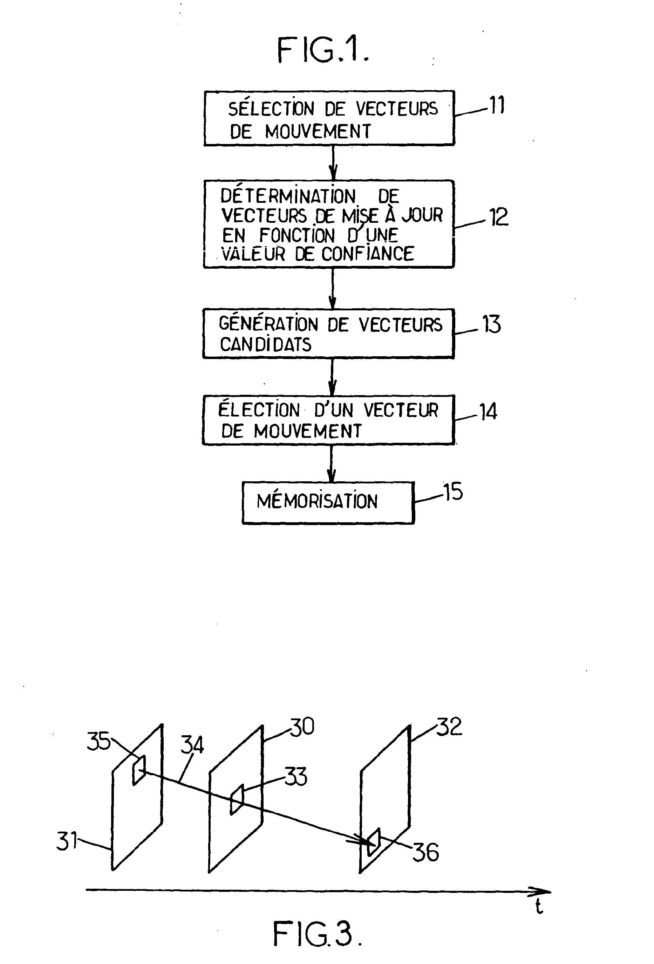

La figure 1 illustre les principales étapes effectuées pour chaque bloc de pixels d'une image en cours de traitement dans un procédé selon un mode de réalisation de l'invention. On sélectionne des vecteurs de mouvement associé à des blocs d'une image déjà traitée ou déjà associés à des blocs d'une image en cours de traitement, étape 11. Puis, pour chacun de ces vecteurs de mouvement sélectionnés, on détermine un vecteur de mise à jour, étape 12, en fonction de la valeur de confiance du vecteur de mouvement respectif. Ensuite, on génère des vecteurs de mouvement candidats à partir des vecteurs de mouvements sélectionnés et de leur vecteur de mise à jour respectif, étape 13. On élit ensuite le vecteur de mouvement parmi les vecteurs de mouvement candidats ainsi générés le plus adapté pour le bloc en cours de traitement, étape 14. Enfin, on mémorise une information associant le vecteur de mouvement élu au bloc de pixels en cours de traitement, étape 15.

Pour chacun des blocs de pixels d'une image traitée, un vecteur de mouvement ainsi qu'une valeur de confiance respective sont ainsi déterminés et mémorisés. Les sections suivantes décrivent plus en détail ces différentes étapes.

Ainsi, dans un mode de réalisation de l'invention, pour chaque bloc courant d'une image en cours de traitement, des vecteurs de mouvement déjà associés à des blocs d'une image traitée précédente et/ou des blocs voisins dans l'image en cours de traitement sont sélectionnés, étape 11. Une valeur de confiance correspondant à chacun de ces vecteurs de mouvement sélectionnés est déterminée.

On ajoute à un vecteur de mouvement auquel correspond une valeur de confiance relativement élevée, c'est-à-dire un vecteur de mouvement représentant de manière relativement fidèle le mouvement de l'ensemble des pixels du bloc auquel il est associé, un vecteur de mise à jour dont la norme est relativement faible.

Inversement, on ajoute à un vecteur de mouvement auquel correspond une valeur de confiance relativement faible, c'est-à-dire un vecteur de mouvement représentant de manière relativement peu fidèle le mouvement de l'ensemble des pixels du bloc auquel il est associé, un vecteur de mise à jour dont la norme est relativement élevée.

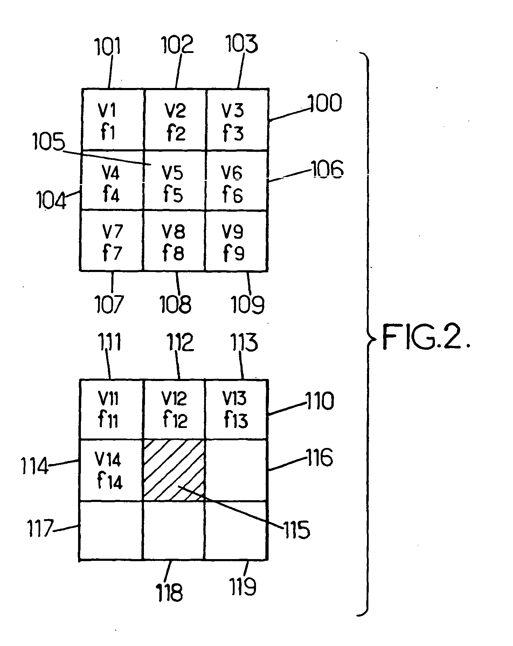

La figure 2 illustre le principe d'un exemple de mise en oeuvre d'un tel procédé de type itératif dans lequel on sélectionne des vecteurs de mouvement parmi des vecteurs de mouvement associés à des blocs de pixels respectifs de l'image en cours de traitement et des vecteurs de mouvement associés à des blocs de pixels respectifs d'une image déjà traitée, respectivement appelés vecteurs de mouvement spatiaux et vecteurs de mouvement temporels. On considère qu'une image déjà traitée 100 comprend 9 blocs de pixels 101-109, à chacun desquels est associé un vecteur de mouvement respectif V1-V9. Une image en cours de traitement 110 comprend 9 blocs de pixels 111-119 parmi lesquels les blocs 111-114 ont déjà été traités et le bloc 115 est en cours de traitement. Pour chaque bloc de pixels déjà traité, un vecteur de mouvement ainsi qu'une valeur de confiance sont mémorisés dans une mémoire adaptée. Ainsi, pour les blocs 101-114, les vecteurs de mouvement V1-V14 ainsi que les valeurs de confiance respectives f1-f14 sont mémorisées.

Dans un mode de réalisation de la présente invention, la valeur de confiance résulte d'un calcul de corrélation entre d'une part les valeurs des pixels d'un premier bloc de pixels pointé par le vecteur de mouvement candidat dans l'image d'origine précédente à partir des positions des pixels du bloc de pixels courant à traiter, et d'autre part les valeurs de pixels d'un second bloc de pixels pointé par le vecteur de mouvement candidat dans l'image d'origine suivante à partir des positions des pixels du bloc de pixels courant à traiter. Ce calcul de corrélation fournit une valeur d'erreur associée au vecteur de mouvement associé au bloc de pixels. Ce mode de réalisation s'applique en particulier à des systèmes de conversion de débit d'images, notamment.

La figure 3 illustre un tel calcul de corrélation. En effet, on réalise un calcul de corrélation pour un vecteur candidat 34 relativement à un bloc courant 33 d'une image en cours de traitement 30. Ce calcul est effectué en fonction des valeurs de pixels d'un premier bloc de pixel 35 dans l'image d'origine 31 pointé par le vecteur candidat 34 à partir des positions du bloc courant 33 et des valeurs de pixels d'un bloc de pixels 36 dans l'image d'origine 32 pointé par le vecteur candidat 34 à partir des positions de pixels du bloc courant 33.

Dans un autre mode de réalisation de l'invention, la valeur de confiance est dérivée d'une erreur calculée, pour chacun des vecteurs de mouvement candidats, sur la base d'une corrélation entre les valeurs des pixels du bloc courant et les valeurs des pixels d'un bloc de pixels pointé par le vecteur candidat dans l'image précédente et/ou suivante. Ce mode de réalisation s'applique en particulier à des systèmes de compression. En effet, dans ce type de système, au moment de l'association d'un vecteur de mouvement avec le bloc courant, on dispose de la valeur des pixels du bloc courant, cette étape étant réalisée du côté émission, avant de transmettre les images. On peut donc calculer une corrélation en fonction des valeurs des pixels qui composent le bloc courant lui même.

La présente invention n'est pas limitée à ces exemples de valeur de confiance.

De préférence, le vecteur de mise à jour a une direction aléatoire, et donc indépendante de la valeur de confiance, alors que la norme du vecteur de mise à jour est fonction de la valeur de confiance qui lui est associée.

Dans un mode de réalisation de l'invention, plus la valeur de confiance est faible, plus la norme du vecteur de mise à jour est élevée et inversement.

On génère ainsi, à partir des vecteurs de mouvement sélectionnés, des vecteurs candidats plus adaptés pour un bloc courant et qui conduisent à une meilleure convergence du procédé.

Dans un mode de réalisation de l'invention, après avoir ainsi généré des vecteurs candidats pour un bloc courant, on détermine une valeur de confiance pour chacun de ces vecteurs candidats. De préférence, la valeur de confiance correspond à une erreur de corrélation comme précédemment décrit.

Puis, on élit un vecteur de mouvement pour le bloc courant. Le vecteur de mouvement élu parmi les vecteurs candidats générés est celui pour lequel la valeur de confiance est la plus élevée ou l'erreur de corrélation est la plus faible.

On mémorise ensuite une information indiquant l'association du bloc courant au vecteur de mouvement élu, ainsi que la valeur de confiance déterminée pour ce vecteur candidat respectivement pour le bloc courant.

Dans un mode réalisation de l'invention, la valeur de confiance est codée sur 2 bits.

Ensuite, l'image traitée est interpolée par détermination des valeurs des pixels du bloc courant en fonction des valeurs des pixels pointés par le vecteur de mouvement élu dans l'image d'origine précédente à partir des positions des pixels du bloc de pixels courant à interpoler et/ou des valeurs des pixels pointés par le vecteur de mouvement élu dans l'image d'origine suivante à partir des positions des pixels du bloc de pixels courant à interpoler.

On obtient de très bons résultats quant à la vitesse de convergence du procédé. De plus, l'invention peut être mise en oeuvre très simplement.

L'invention permet un meilleur rendu de l'image en ce qui concerne les mouvements rapides et une meilleure homogénéité de performance dans la séquence des images. Elle peut avantageusement être mise en oeuvre dans des systèmes tels que définis en introduction en améliorant le rendu des images.

## Revendications

1. Procédé d'estimation de mouvement pour le traitement d'images destinées à s'insérer chacune entre une image d'origine précédente et une image d'origine suivante dans une séquence d'images déterminées, chaque image étant divisée en une pluralité de blocs de pixels, un vecteur de mouvement étant associé à chacun des blocs de pixels d'une image traitée, le procédé comprenant pour un bloc de pixels courant d'une image en cours de traitement, les étapes de:
- sélection de vecteurs de mouvement comprenant des vecteurs de mouvement respectivement associés à des blocs de pixels déterminés de l'image en cours de traitement et/ou des vecteurs de mouvement respectivement associés à des blocs de pixels déterminés d'une image déjà traitée (11) ;
- pour chacun des vecteurs de mouvement ainsi sélectionnés, détermination d'un vecteur de mise à jour associé (12) ;
- génération de vecteurs de mouvement candidats, chacun étant défini à partir d'un vecteur de mouvement sélectionné et du vecteur de mise à jour associé (13) ;
- élection d'un vecteur de mouvement parmi lesdits vecteurs de mouvement candidats (14);
- mémorisation d'une information associant ledit vecteur de mouvement élu au bloc de pixels courant (15) ;
suivant lequel on calcule et on mémorise une valeur de confiance pour chaque vecteur de mouvement associé à un bloc; et suivant lequel ledit vecteur de mise à jour est déterminé en fonction de ladite valeur de confiance respective.

2. Procédé selon la revendication 1, suivant lequel la valeur de confiance est une valeur d'erreur calculée sur la base d'une corrélation entre les valeurs des pixels d'un premier bloc de pixels (35) pointé par le vecteur de mouvement candidat (34) donné dans l'image d'origine précédente (31) à partir des positions des pixels du bloc de pixels courant (33) à traiter et/ou les valeurs de pixels d'un second bloc de pixels (36) pointé par le vecteur de mouvement candidat (34) donné dans l'image d'origine suivante (32) à partir des positions des pixels du bloc de pixels courant (34) à traiter.

3. Procédé selon la revendication 1, suivant lequel la valeur de confiance est dérivée d'une erreur calculée sur la base d'une corrélation entre les valeurs des pixels du bloc de pixels courant et les valeurs des pixels d'un bloc de pixels pointé par le vecteur de mouvement candidat donné dans l'image précédente et/ou suivante.

4. Procédé selon l'une quelconque des revendications précédentes, suivant lequel la norme du vecteur de mise à jour est déterminée en fonction de la valeur de confiance respective alors que sa direction est déterminée aléatoirement.

5. Procédé selon l'une quelconque des revendications précédentes, suivant lequel plus la valeur de confiance est faible, plus la norme du vecteur de mise à jour est élevée et inversement.

6. Procédé selon l'une quelconque des revendications précédentes, suivant lequel on détermine une valeur de confiance pour chacun des vecteurs de mouvement candidats et on élit le vecteur de mouvement candidat pour lequel la valeur de confiance respective est la plus élevée.

7. Procédé selon l'une quelconque des revendications précédentes, suivant lequel l'image traitée est interpolée par une détermination des valeurs des pixels du bloc courant en fonction des valeurs des pixels pointés par le vecteur de mouvement élu dans l'image d'origine précédente à partir des positions des pixels du bloc de pixels courant à interpoler et/ou des valeurs des pixels pointés par le vecteur de mouvement élu dans l'image d'origine suivante à partir des positions des pixels du bloc de pixels courant à interpoler.

8. Dispositif d'estimation de mouvement pour le traitement d'images destinées à s'insérer chacune entre une image d'origine précédente et une image d'origine suivante dans une séquence d'images déterminées, chaque image étant divisée en une pluralité de blocs de pixels, un vecteur de mouvement étant associé à chacun des blocs de pixels d'une image traitée, le dispositif comprenant des moyens de traitement d'un bloc de pixels courant d'une image en cours de traitement incluant :
- une unité de sélection pour sélectionner des vecteurs de mouvement comprenant des vecteurs de mouvement associés à des blocs de pixels respectifs de l'image en cours de traitement et/ou des vecteurs de mouvement respectivement associés à des blocs de pixels déterminés d'une image déjà traitée
- une unité de détermination pour déterminer un vecteur de mise à jour associé pour chacun des vecteurs de mouvement sélectionnés ;
- une unité de génération pour générer des vecteurs de mouvement candidats, chacun étant défini à partir d'un vecteur de mouvement sélectionné et du vecteur de mise à jour associé;
- une unité d'élection pour élire un vecteur de mouvement parmi lesdits vecteurs de mouvement candidats;
- une mémoire pour mémoriser une information associant ledit vecteur de mouvement élu au bloc de pixels courant ;
et comprenant en outre des moyens de calcul et de mémorisation d'une valeur de confiance pour chaque vecteur de mouvement associé à un bloc; l'unité de détermination étant adaptée pour déterminer ledit vecteur de mise à jour en fonction de ladite valeur de confiance respective.

9. Dispositif selon la revendication 8, dans lequel la valeur de confiance est une erreur calculée sur la base d'une corrélation entre les valeurs des pixels d'un premier bloc de pixels (35) pointé par le vecteur de mouvement candidat (34) donné dans l'image d'origine précédente (31) à partir des positions des pixels du bloc de pixels courant (33) à traiter et/ou les valeurs de pixels d'un second bloc de pixels (36) pointé par le vecteur de mouvement candidat (34) donné dans l'image d'origine suivante (32) à partir des positions des pixels du bloc de pixels courant (33) à traiter.

10. Dispositif selon la revendication 8, suivant lequel la valeur de confiance est dérivée d'une erreur calculée sur la base d'une corrélation entre les valeurs des pixels du bloc de pixels courant et les valeurs des pixels d'un bloc de pixels pointé par le vecteur de mouvement candidat donné dans l'image précédente et/ou suivante.

11. Dispositif selon l'une quelconque des revendications 8 à 10, dans lequel la norme du vecteur de mise à jour est déterminée en fonction de la valeur de confiance respective alors que sa direction est déterminée aléatoirement.

12. Dispositif selon l'une quelconque des revendications 8 à 11, dans lequel plus la valeur de confiance est faible, plus la norme du vecteur de mise à jour est élevée et inversement.

13. Dispositif selon l'une quelconque des revendications 8 à 12, comprenant également des moyens de détermination d'une valeur de confiance pour chacun des vecteurs de mouvement candidats, dispositif dans lequel on élit le vecteur de mouvement candidat pour lequel la valeur de la confiance respective est la plus élevée.

14. Produit « programme d'ordinateur » chargeable directement dans la mémoire interne d'un ordinateur numérique, comprenant des portions de code de logiciel pour l'exécution des étapes du procédé selon l'une quelconque des revendications 1 à 7 lorsque ledit programme est exécuté dans l'ordinateur.

## Claims

1. Motion estimation method for the processing of images intended to be inserted, each between a preceding original image and a following original image, in a sequence of determined images, each image being divided into a plurality of pixels blocks, a motion vector being associated with each of the pixels blocks of a processed image, the method comprising, for a current pixels block of an image currently being processed, the steps of:
- selecting motion vectors comprising motion vectors respectively associated with determined pixels blocks of the image currently being processed and/or motion vectors respectively associated with determined pixels blocks of an already processed image (11);
- determining, for each of the motion vectors thus selected, an associated updating vector (12);
- generating candidate motion vectors, each being defined on the basis of a selected motion vector and of the associated updating vector (13);
- electing a motion vector among said candidate motion vectors (14); and
- storing, in memory, information associating said elected motion vector with the current pixels block (15);
wherein a confidence value for each motion vector associated with a block is calculated and stored in memory; and wherein said updating vector is determined on the basis of said respective confidence value.

2. Method according to Claim 1, wherein the confidence value is an error value calculated on the basis of a correlation between the values of the pixels of a first pixels block (35) in the preceding original image (31) that are indicated by a given candidate motion vector (34) from the positions of the pixels of the current pixels block (33) to be processed and/or the values of the pixels of a second pixels block (36) in the following original image (32) that are indicated by a given candidate motion vector (34) from the positions of the pixels of the current pixels block (33) to be processed.

3. Method according to Claim 1, wherein the confidence value is derived from an error calculated on the basis of a correlation between the values of the pixels of the current pixels block and the values of the pixels of a pixels block given in the preceding and/or following image that are indicated by a given candidate motion vector.

4. Method according to any one of the preceding claims, wherein the norm of the updating vector is determined according to the respective confidence value, whereas its direction is determined randomly.

5. Method according to any one of the preceding claims, wherein the lower the confidence value, the higher the norm of the updating vector, and vice versa.

6. Method according to any one of the preceding claims, wherein a confidence value is determined for each candidate motion vector and the candidate motion vector for which the respective confidence value is the highest is elected.

7. Method according to any one of the preceding claims, wherein the processed image is interpolated by determining pixel values of the current block according to the values of the pixels in the preceding original image that are indicated by the elected motion vector from the positions of the pixels of the current pixels block to be interpolated and/or according to the values of the pixels in the following original image that are indicated by the elected motion vector from the positions of the pixels of the current pixels block to be interpolated.

8. Motion estimation device for the processing of images intended to be inserted, each between a preceding original image and a following original image, in a sequence of determined images, each image being divided into a plurality of pixels blocks, a motion vector being associated with each of the pixels blocks of a processed image, the device comprising means for processing a current pixels block of an image currently being processed, which device includes:
- a selection unit for selecting motion vectors comprising motion vectors associated with respective pixels blocks of the image currently being processed and/or motion vectors respectively associated with determined pixels blocks of an already processed image;
- a determination unit for determining an associated updating vector for each of the selected motion vectors;
- a generation unit for generating candidate motion vectors, each being defined on the basis of a selected motion vector and of the associated updating vector;
- an election unit for electing a motion vector among said candidate motion vectors; and
- a memory for storing information associating said elected motion vector with the current pixels block;
and further comprising means for calculating, and storing in memory, a confidence value for each motion vector associated with a block, the determination unit being designed to determine said updating vector on the basis of said respective confidence value.

9. Device according to Claim 8, wherein the confidence value is an error calculated from a correlation between the values of the pixels of a first pixels block (35) in the preceding original image (31) that are indicated by a given candidate motion vector (34) from the positions of the pixels of the current pixels block (33) to be processed and/or the values of the pixels of a second pixels block (36) in the following original image (32) that are indicated by a given candidate motion vector (34) from the positions of the pixels of the current pixels block (33) to be treated.

10. Device according to Claim 8, wherein the confidence value is derived from an error calculated on the basis of a correlation between the values of the pixels of the current pixels block and the values of the pixels of a pixels block in the preceding and/or following image that are indicated by a given candidate motion vector.

11. Device according to any one of Claims 8 to 10, wherein the norm of the updating vector is determined on the basis of the respective confidence value, while its direction is determined randomly.

12. Device according to any one of Claims 8 to 11, wherein the lower the confidence value, the higher the norm of the updating vector, and vice versa.

13. Device according to any one of Claims 8 to 12, further comprising means for determining a confidence value for each candidate motion vectors, device wherein the candidate motion vector for which the respective confidence value is the highest is elected.

14. "Computer program" product that can be loaded directly into the internal memory of a digital computer, which includes software code portions for executing the steps of the method according to any one of Claims 1 to 7 when said program is run on the computer.

## Patentansprüche

1. Verfahren zur Bewegungsschätzung für die Verarbeitung von Bildern, die dazu bestimmt sind, jeweils zwischen einem vorhergehenden Bild und einem nachfolgenden Bild in eine Folge bestimmter Bilder eingefügt zu werden, wobei jedes Bild in eine Vielzahl von Pixel-Blöcken unterteilt ist und jedem Pixel-Block eines verarbeiteten Bildes ein Bewegungsvektor zugeordnet ist, wobei das Verfahren für einen aktuellen Pixel-Block eines Bildes während der Verarbeitung die folgenden Schritte umfasst:
- Auswählen von Bewegungsvektoren, die Bewegungsvektoren aufweisen, die jeweils bestimmten Pixel-Blöcken des Bildes während der Verarbeitung zugeordnet sind, und/oder Bewegungsvektoren, die jeweils bestimmten Pixel-Blöcken eines bereits verarbeiteten Bildes zugeordnet sind (11);
- Bestimmen eines zugeordneten Aktualisierungsvektors für jeden der auf diese Weise ausgewählten Bewegungsvektoren (12);
- Erzeugen von Bewegungsvektor-Kandidaten, wobei jeder anhand eines ausgewählten Bewegungsvektors und des zugeordneten Aktualisierungsvektors definiert wird (13);
- Wahl eines Bewegungsvektors aus den Bewegungsvektor-Kandidaten (14);
- Speichern einer Information, die dem aktuellen Pixel-Block den gewählten Bewegungsvektor zuordnet (15);
gemäß dem ein Konfidenzwert für jeden einem Block zugeordneten Bewegungsvektor berechnet und gespeichert wird; und
gemäß dem der Aktualisierungsvektor in Abhängigkeit von dem jeweiligen Konfidenzwert bestimmt wird.

2. Verfahren nach Anspruch 1,
gemäß dem der Konfidenzwert ein Fehlerwert ist, der berechnet wird auf der Grundlage einer Korrelation zwischen den Pixelwerten eines ersten Pixel-Blocks (35), der von dem gegebenen Bewegungsvektor-Kandidaten (34) in dem vorhergehenden Bild (31) anhand der Positionen der Pixel des aktuellen zu verarbeitenden Pixel-Blocks (33) bezeichnet ist, und/oder den Pixelwerten eines zweiten Pixel-Blocks (36), der von dem gegebenen Bewegungsvektor-Kandidaten (34) in dem nachfolgenden Bild (32) anhand der Positionen der Pixel des aktuellen zu verarbeitenden Pixel-Blocks (34) bezeichnet ist.

3. Verfahren nach Anspruch 1,
gemäß dem der Konfidenzwert von einem Fehler hergeleitet wird, der berechnet wird auf der Grundlage einer Korrelation zwischen den Pixelwerten des aktuellen Pixel-Blocks und den Pixelwerten eines Pixel-Blocks, der von dem gegebenen Bewegungsvektor-Kandidaten in dem vorhergehenden und/oder nachfolgenden Bild bezeichnet ist.

4. Verfahren nach einem der vorhergehenden Ansprüche,
gemäß dem die Norm des Aktualisierungsvektors in Abhängigkeit von dem jeweiligen Konfidenzwert bestimmt wird, während seine Richtung zufällig bestimmt wird.

5. Verfahren nach einem der vorhergehenden Ansprüche,
gemäß dem je geringer der Konfidenzwert ist, desto höher ist die Norm des Aktualisierungsvektors und umgekehrt.

6. Verfahren nach einem der vorhergehenden Ansprüche,
gemäß dem ein Konfidenzwert für jeden Bewegungsvektor-Kandidaten bestimmt wird und der Bewegungsvektor-Kandidat gewählt wird, für den der jeweilige Konfidenzwert am höchsten ist.

7. Verfahren nach einem der vorhergehenden Ansprüche,
gemäß dem eine Interpolation des verarbeiteten Bildes erfolgt durch Bestimmen der Pixelwerte des aktuellen Blocks in Abhängigkeit von den Werten der Pixel, die durch den gewählten Bewegungsvektor in dem vorhergehenden Bild anhand der Positionen der Pixel des aktuellen zu interpolierenden Pixel-Blocks bezeichnet sind, und/oder den Werten der Pixel, die durch den gewählten Bewegungsvektor in dem nachfolgenden Bild anhand der Positionen der Pixel des aktuellen zu interpolierenden Pixel-Blocks bezeichnet sind.

8. Vorrichtung zur Bewegungsschätzung für die Verarbeitung von Bildern, die dazu bestimmt sind, jeweils zwischen einem vorhergehenden Bild und einem nachfolgenden Bild in eine Folge bestimmter Bilder eingefügt zu werden, wobei jedes Bild in eine Vielzahl von Pixel-Blöcken unterteilt ist und jedem Pixel-Block eines verarbeiteten Bildes ein Bewegungsvektor zugeordnet ist, wobei die Vorrichtung Mittel zur Verarbeitung eines aktuellen Pixel-Blocks eines Bildes während der Verarbeitung aufweist, die umfassen:
- eine Auswahleinheit zum Auswählen von Bewegungsvektoren, die Bewegungsvektoren aufweisen, die den jeweiligen Pixel-Blöcken des Bildes während der Verarbeitung zugeordnet sind, und/oder Bewegungsvektoren, die jeweils bestimmten Pixel-Blöcken eines bereits verarbeiteten Bildes zugeordnet sind;
- eine Bestimmungseinheit zum Bestimmen eines zugeordneten Aktualisierungsvektors für jeden der ausgewählten Bewegungsvektoren;
- eine Erzeugungseinheit zum Erzeugen von Bewegungsvektor-Kandidaten, wobei jeder anhand eines ausgewählten Bewegungsvektors und des zugeordneten Aktualisierungsvektors definiert ist;
- eine Wahleinheit zum Auswählen eines Bewegungsvektors aus den Bewegungsvektor-Kandidaten;
- einen Speicher zum Speichern einer Information, die dem aktuellen Pixel-Block den gewählten Bewegungsvektor zuordnet;
und ferner Mittel zum Berechnen und Speichern eines Konfidenzwerts für jeden Bewegungsvektor, der einem Block zugeordnet ist;
wobei die Bestimmungseinheit den Aktualisierungsvektor in Abhängigkeit von dem jeweiligen Konfidenzwert zu bestimmen vermag.

9. Vorrichtung nach Anspruch 8,
bei welcher der Konfidenzwert ein Fehler ist, der berechnet wird auf der Grundlage einer Korrelation zwischen den Pixelwerten eines ersten Pixel-Blocks (35), der von dem gegebenen Bewegungsvektor-Kandidaten (34) in dem vorhergehenden Bild (31) anhand der Positionen der Pixel des aktuellen zu verarbeitenden Pixel-Blocks (33) bezeichnet ist, und/oder den Pixelwerten eines zweiten Pixel-Blocks (36), der von dem gegebenen Bewegungsvektor-Kandidaten (34) in dem nachfolgenden Bild (32) anhand der Positionen der Pixel des aktuellen zu verarbeitenden Pixel-Blocks (34) bezeichnet ist

10. Vorrichtung nach Anspruch 8,
gemäß der der Konfidenzwert von einem Fehler hergeleitet wird, der berechnet wird auf der Grundlage einer Korrelation zwischen den Pixelwerten des aktuellen Pixel-Blocks und den Pixelwerten eines Pixel-Blocks, der von dem gegebenen Bewegungsvektor-Kandidaten in dem vorhergehenden und/oder nachfolgenden Bild bezeichnet ist.

11. Vorrichtung nach einem der Ansprüche 8 bis 10,
gemäß der die Norm des Aktualisierungsvektors in Abhängigkeit von dem jeweiligen Konfidenzwert bestimmt wird, während seine Richtung zufällig bestimmt wird.

12. Vorrichtung nach einem der Ansprüche 8 bis 11,
gemäß der je geringer der Konfidenzwert ist, desto höher ist die Norm des Aktualisierungsvektors und umgekehrt.

13. Vorrichtung nach einem der Ansprüche 8 bis 12, die auch Mittel zum Bestimmen eines Konfidenzwerts für jeden der Bewegungsvektor-Kandidaten aufweist, Vorrichtung, bei welcher der Bewegungsvektor-Kandidat gewählt wird, für den der jeweilige Konfidenzwert am höchsten ist.

14. Computerprogramm-Produkt, das direkt in den internen Speicher eines Digitalrechners geladen werden kann, mit Programmcode-Abschnitten zum Ausführen der Schritte des Verfahrens nach einem der Ansprüche 1 bis 7, wenn dieses Programm im Rechner ausgeführt wird.
